# EUROPEAN PATENT SPECIFICATION

(11) **EP 1 188 660 B1**
(45) Date of publication and mention of the grant of the patent: **27.06.2007**
(21) Application number: 01122293.2
(22) Date of filing: 18.09.2001
(51) Int. Cl.: B62M 23/02

(54) **Assist power controller in motor assisted bicycle**
Steuerungseinrichtung für Fahrrad mit Hilfsmotor
Dispositif de contrôle pour bicyclette à moteur auxiliaire

(30) Priority: 18.09.2000 JP 2000281581
(43) Date of publication of application: 20.03.2002
(73) Proprietor: HONDA GIKEN KOGYO KABUSHIKI KAISHA, Tokyo (JP)
(72) Inventor: Cho, Toshiyuki, c/o K.K.Honda Gijutsu Kenkyusho, Wako-shi, Saitama (JP); Sakagami, Koji, c/o K.K.Honda Gijutsu Kenkyusho, Wako-shi, Saitama (JP); Miura, Nobuo, c/o K.K.Honda Gijutsu Kenkyusho, Wako-shi, Saitama (JP)
(74) Representative: Liska, Horst

(56) References cited:
- EP-A- 0 697 332
- EP-A- 0 738 653
- EP-A- 0 795 463
- EP-A- 0 893 338
- US-A- 5 664 636
- PATENT ABSTRACTS OF JAPAN vol. 2000, no. 06, 22 September 2000 (2000-09-22) & JP 2000 072080 A (YAMAHA MOTOR CO LTD), 7 March 2000 (2000-03-07)
- PATENT ABSTRACTS OF JAPAN vol. 1998, no. 10, 31 August 1998 (1998-08-31) & JP 10 114292 A (TEC CORP), 6 May 1998 (1998-05-06)
- PATENT ABSTRACTS OF JAPAN vol. 1998, no. 08, 30 June 1998 (1998-06-30) & JP 10 076987 A (BRIDGESTONE CYCLE CO), 24 March 1998 (1998-03-24)

## Description

The present invention relates to an assist power controller in a motor-assisted bicycle and more particularly to an assist power controller in a motor-assisted bicycle which interrupts or restricts the addition of an assist power when a pedal treading force is low and which can thereby diminish the consumption of a battery.

There is known a motor-assisted bicycle provided with a man-power drive system for the transfer of a treading force applied to a pedal to a rear wheel and a motor drive system capable of adding an assist power to the man-power drive system in accordance with the treading force. In such a motor-assisted bicycle it is desired to diminish the consumption of a battery and thereby increase a running distance based on a single charging. For example, in Japanese Patent Laid-open No. JP 2000-72080 A, there is disclosed an assist power controller for a motor-assisted bicycle according to the preamble of claim 1, which, when the bicycle is in a state not requiring any assist power, for example when the bicycle is running on a flat road, stops the supply of an electric current to the motor or decreases a current value, thereby suppressing the consumption of a battery.

The control method disclosed in the above publication involves the following problems. In this conventional control method, the addition (assist) of an assist power is interrupted or restricted (assist-cut) when the state of a treading force being not larger than a low reference value of treading force has continued a predetermined time. In the event a noise is mixed into a treading force sensor or an instantaneous medium treading force is inputted for getting over a slight stepped portion of a flat road, a timer for continuance time measurement is reset and an effective assist-cut is not executed.

When a high reference value of treading force is inputted, an assist-cut state is interrupted and an assist state is resumed. Therefore, when the bicycle is accelerated with a treading force not reaching the high reference value of treading force, for example at the time of gradual acceleration on a flat road, there arises the problem that a return to the assist state is not made.

It is an object of the present invention to solve the above-mentioned problems of the prior art and provide an assist power controller in a motor-assisted bicycle which, when assist is not required, can effect assist-cut by interrupting or restricting the supply of an electric current effectively.

This object is achieved by an assist power controller for a motor-assisted bicycle according to claim 1.

According to a first feature of the invention, the assist power controller of the invention comprises treading force level detecting means which, on the basis of history of a treading force applied to a pedal, detects that the treading force is at a predetermined assist-cut level and assist power output means which, when it is judged by the treading force level detecting means that the treading force is at the assist-cut level, stops the addition of the assist power or decreases an addition ratio of the assist power to the treading force.

Furthermore, according to a second feature of the invention, the treading force level detecting means comprises treading force judging means which detects the magnitude of the present treading force relative to a reference value of treading force and a low level counter which is incremented or decremented in accordance with the magnitude of the treading force, and when a count value of the low level counter becomes a reference count value, it is judged that the treading force is at the assist-cut level

Moreover, according to a third feature of the invention, the count value of the low level counter is decremented when the treading force exceeds a predetermined upper-limit value of treading force, while when the treading force is smaller than a predetermined lower-limit value of treading force, the count value is incremented, and when the count value becomes a value of not smaller than the reference count value, it is judged that the treading force is at the assist-cut level.

According to the above features, assist-cut is executed when it is judged, on the basis of not an instantaneous value but history of the treading force, that the treading force is at a low level requiring an assist power. Particularly, according to the above second feature, by a simple processing of incrementing or decrementing the counter it is detected that the treading force is at a low level requiring an assist power. According to the above third feature, the zone between the upper- and lower-limit values of treading force becomes a dead zone and it is possible to make the count value variation range small.

Furthermore, according to claim 2, the assist power controller may comprise treading force changing level detection means which, on the basis of history of the treading force, detects that the treading force is changing in the vicinity of a predetermined assist level and assist power output means which starts the addition of the assist power when it is judged by the treading force changing level detecting means that the treading force is changing in the vicinity of the assist level.

Furthermore, according to claim 3, the treading force changing level detecting means may be constructed so as to judge that the treading force is changing in the vicinity of the assist level when the treading force exceeds a reference value of treading force level in a continuous changing cycle thereof.

Furthermore, according to claim 4, the reference value of treading force level may be set at a value corresponding to a treading force for gradual acceleration on a flat road.

Furthermore, according to claim 5, the treading force changing level detecting means may have an assist counter which detects the number of times the treading force exceeds the reference value of treading force level in a continuous cycle, and is constructed so as to judge that the treading force is changing in the vicinity of the assist level when a count value of the assist counter exceeds a predetermined number of times.

Moreover, according to claim 6, the reference value of treading force level may be set in a plural number so that the lower the level, the larger the predetermined number of times set as the count value.

According to the above claims 2 to 6, assist may be executed when it is judged on the basis of history of the treading force that the treading force is changing in the vicinity of a level which requires assist. Moreover, according to the above claims 3 and 5, since it may be judged that assist is needed when the changing cycle exceeds the reference level of treading force continuously, it is possible to prevent an erroneous judgment based on an instantaneous change of treading force. According to the above claim 4, assist can be started upon detection of a medium degree of treading force level in case of slow acceleration on a flat road. According to the above claim 6, assist can be started with a quicker response in the application of a high level of treading force to the pedal than in the application of a low level of treading force.

An embodiment of the present invention will now be described with reference to the drawings, in which:
Fig. 1 is a block diagram showing principal functions of an assist power controller according to an embodiment of the present invention.
Fig. 2 is a side view of a motor-assisted bicycle.
Fig. 3 is a sectional view of a principal portion of a motor assist unit.
Fig. 4 is a sectional view taken on line A-A in Fig. 3.
Fig. 5 is a plan view showing an example of a power switch.
Fig. 6 illustrates a treading force history for explaining an assist-cut condition.
Fig. 7 illustrates a treading force history for explaining an assist start condition.
Fig. 8 illustrates a treading force history for explaining an assist start establishing condition at plural treading force levels.
Fig. 9 is a flow chart of a principal portion of an ECO mode including assist and assist-cut.

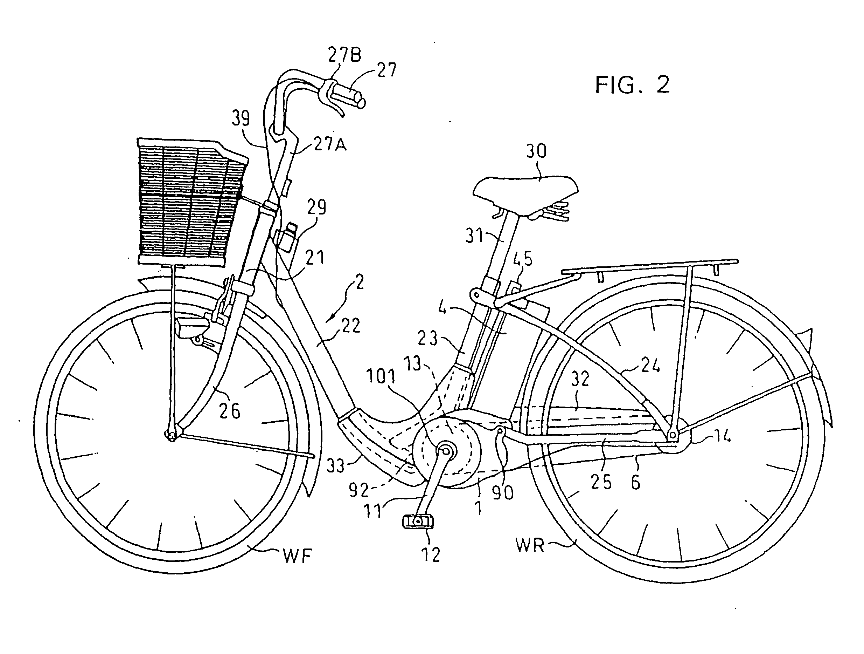

Fig. 2 is a side view of a motor-assisted bicycle according to an embodiment of the present invention. A body frame 2 of the motor-assisted bicycle is provided with a head pipe 21 disposed in a front position of the vehicle body, a down-pipe 22 extending downwardly backward from the head pipe 21, and a seat post 23 rising from near a rear end portion of the down-pipe 22. The connection between the down-pipe 22 and the seat post 23 and the vicinity thereof are covered with a resin cover 33 which is vertically divided in two for mounting and removal. A steering handlebar 27 is fitted in an upper portion of the head pipe 21 rotatably through a handlebar post 27A, and a front fork 26 is connected to the handlebar post 27A below the head pipe 21. A front wheel WF is supported by a lower end of the front fork 26 rotatably through an axle.

A motor assist unit 1 as a drive unit including a treading force assisting electric motor (not shown) is suspended from a lower portion of the body frame 2 by being bolted at three places which are a connection 92 located at a lower end of the down-pipe 22, a connection 91 provided in a front portion of a battery bracket 49 welded to the seat post 23, and a connection 90 provided in a rear portion of the bracket 49. In the connection 90, a chain stay 25 is also clamped together with the motor assist unit 1.

A power switch 29 in the motor assist unit 1 is disposed on the down-pipe 22 at a position close to the head pipe 21. The power switch 29 can select an ECO mode which suppresses the amount of electric power consumed and the details of which will be described later. The power supply can be turned ON with a key, but a remote control switch using an infrared signal for example may be used to apply power. In this case, a receiver for receiving the infrared signal transmitted from the remote control switch is provided in the power switch 29.

The motor assist unit 1 is provided with a driving sprocket 13, and the rotation of a crank shaft 101 is transmitted to a rear sprocket 14 from the driving sprocket 13 through a chain 6. A brake lever 27B is provided on the handlebar 27. When the brake lever 27B is operated, this operation is transmitted to a brake unit (not shown) for a rear wheel WR through a brake wire 39.

The crank shaft 101 is supported rotatably by the motor-assist unit 1 and pedals 12 are supported on both right and left ends of the crank shaft 101 through a crank 11. A pair of right and left chain stays 25 extend backward from the motor assist unit 1 and the rear wheel WR as a driving wheel is supported through an axle between rear ends of the chain stays 25. A pair of right and left seat stays 24 are provided between the rear ends of both chain stays 25. A seat pipe 31 provided with a seat 30 at an upper end thereof is fitted in the seat post 23 so as to be slidable within the seat post to adjust the height of the seat 30.

A battery 4 is mounted below the seat 30 and behind the seat post 23. The battery 4 is received within a receptacle case and is secured to the battery bracket 49. The battery 4 includes plural battery cells and is installed along the seat post 23 so that its longitudinal direction is approximately a vertical direction.

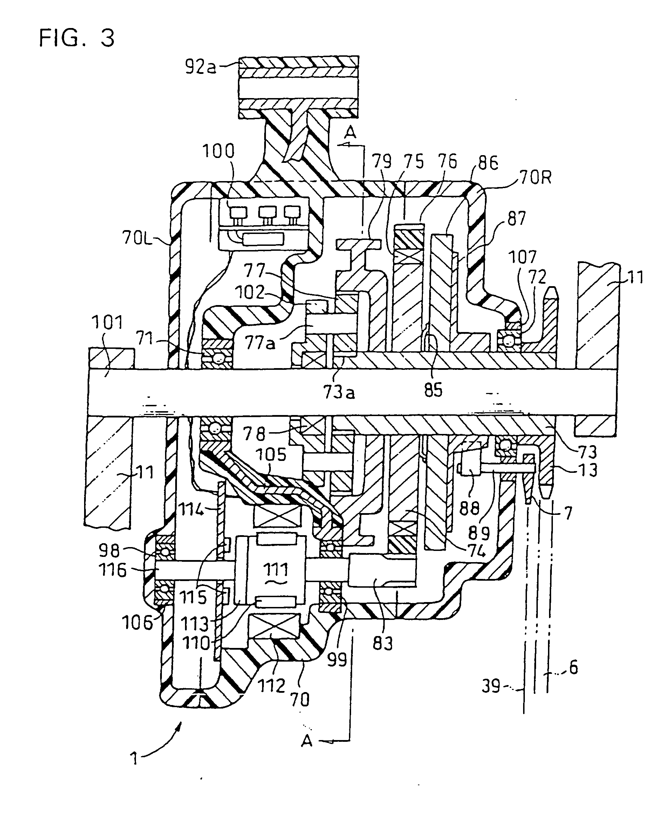

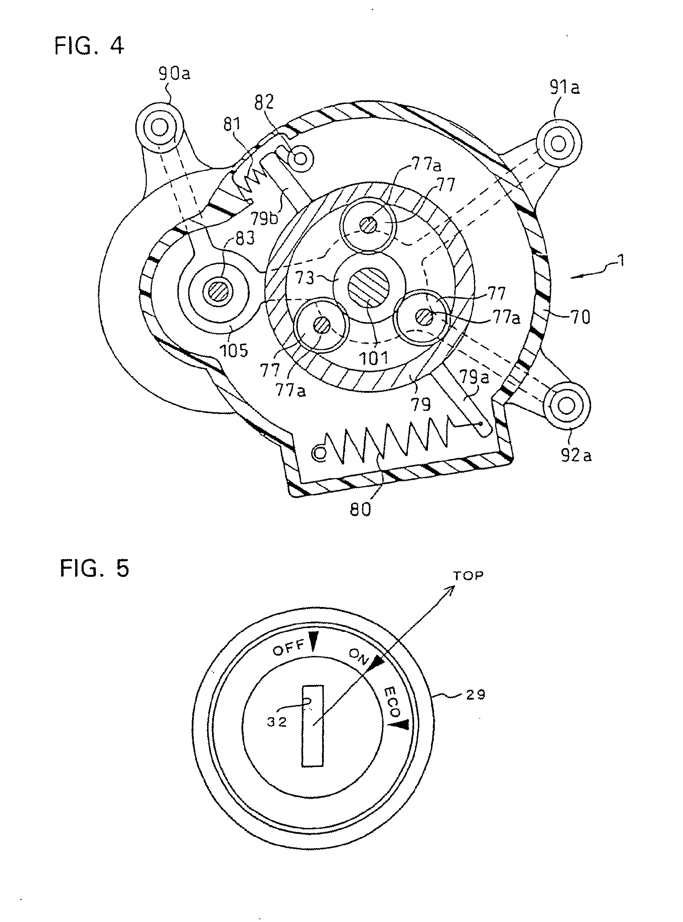

Fig. 3 is a sectional view of the motor assist unit 1 and Fig. 4 is a view as seen in the direction of arrows A in Fig. 3. A case of the motor assist unit 1 comprises a body 70 and a left cover 70L and a right cover 70R which covers are secured respectively to both side faces of the body 70. For the reduction of weight, the case 70 and the left and right covers 70L, 70R are formed by molding a resin. The case body 70 is formed on an outer periphery thereof with hangers 90a, 91a, and 92a to match the connections 90, 91, and 92, respectively, of the down-pipe 22 and the battery bracket 49. A bearing 71 is provided in the body 70 and a bearing 72 is provided in the right cover 70R. The crank shaft 101 extends through the bearing 71 and in contact with an inner ring of the bearing, while a sleeve 73 extends through the bearing 72 and in contact with an inner ring of the bearing, the sleeve 73 being coaxial with the crank shaft 101 and slidable in an outer peripheral direction of the crank shaft. Thus, the crank shaft 101 is supported by both bearings 71 and 72.

A boss 74 is fixed to the sleeve 73 and an assist gear 76 is formed on an outer periphery of the boss 74 through a one-way clutch 75 constituted by a ratchet mechanism for example. From the standpoint of attaining the reduction of weight it is preferable that the assist gear 76 be made of resin, while from the standpoint of attaining quietness it is preferable that the assist gear 76 be a helical gear.

A gear 73a is formed in an end portion of the sleeve 73, and with the gear 73a as a sun gear, three planetary gears 77 are arranged therearound. The planetary gears 77 are supported respectively by shafts 77a erected on a support plate 102, which in turn is supported on the crank shaft 101 through a one-way clutch 78. The planetary gears 77 are in mesh with an inner gear formed in an inner periphery of a treading force detecting ring 79. The driving sprocket 13, which is connected to the rear sprocket 14 through the chain 6, is fixed to an end portion (a gear-free side) of the sleeve 73.

The treading force detecting ring 79 has arms 79a and 79b projecting from an outer periphery thereof. The arms 79a and 79b are urged in a direction (clockwise in the figure) opposite to the rotational direction in bicycle running of the crank shaft 101 by means of a tension spring 80 installed between the arm 79a and the body 70 and a compression spring 81 installed between the arm 79b and the body 70. The compression spring 81 is provided for preventing wobbling of the ring 79. A potentiometer 82 for detecting a displacement in the rotational direction of the ring 79 is provided on the arm 79b.

A clutch plate 86 for regenerative generation is disposed adjacent the assist gear 76 through a spring washer 86. Further, adjacent the clutch plate 86 is a pressure plate 87 for pressing the plate 86 toward the assist gear 76 against the spring washer. The clutch plate 86 and the pressure plate 87 are mounted on the sleeve 73 slidably in the axial direction of the sleeve.

The pressure plate 87 is biased toward the clutch plate 86 by means of a cam 88 which is abutted against a slant face formed in a hub portion of the pressure plate. The cam 88 is pivotably supported by the right cover 70R through a shaft 89 and a lever 7 is fixed onto an end portion of the shaft 89, i.e., an end portion of the shaft projecting outwards from the right cover 70R. The lever 7 is connected to the brake wire 39. When the brake is applied, the lever 7 is turned by the brake wire 39, so that the cam 88 turns about the shaft 89.

A pinion 83 fixed onto a shaft of a motor M is in mesh with the assist gear 76. The motor M, which is a three-phase brushless motor, comprises a rotor 111 having magnetic poles 110 of a Neodium (Nd-Fe-B) magnet, stator coils 112 provided along an outer periphery of the rotor 111, a rubber magnet ring (N and S poles are arranged alternately to form a ring) 113 for a magnetic pole sensor, the rubber magnet ring 113 being provided on a side face of the rotor 111, Hall ICs 115 mounted to a substrate 114 in opposition to the rubber magnet ring 113, and a shaft 116 of the rotor 111. The shaft 116 is supported by means of a bearing 98 installed in the left cover 70L and a bearing 99 installed in the case body 70.

A controller 100 which includes FET and capacitor for a driver to control the motor M is disposed at a position close to the front side of the vehicle body and an electric current is supplied to the stator coils 112 through the FET. The controller 100 causes the motor M to operate in accordance with a treading force detected by the potentiometer 82 which serves as a treading force detector, generating an assist power.

From the standpoint of attaining the reduction of weight it is preferable that the case body 70 and the covers 70L, 70R be formed by molding a resin, but at the same time it is required that the portions located around the bearings be enhanced in strength. In the motor assist unit 1 of this embodiment, metallic reinforcing members 105, 106, and 107 formed of, say, iron, aluminum, aluminum alloy, or copper alloy are disposed around the bearings. Particularly, the reinforcing members disposed in the case body 70 are for reinforcing portions to be loaded heavily such as the bearing 71 for the crank shaft, the bearing 99 for the motor shaft 116, and hangers 90a, 91a and 92a serving as mounting members for the vehicle body. Therefore, the reinforcing members disposed in various portions are interconnected into an integral reinforcing plate 105. With this reinforcing plate 105, the reinforcing members disposed around the bearings and hangers are connected with one another, whereby the reinforcing effect is further enhanced.

As to the reinforcing plate 105, it is not always required that all of the reinforcing members disposed around the bearings 71, 99 and hangers 90a, 91a, 92a be interconnected. Among these reinforcing members, those adjacent to each other, e.g., the reinforcing member disposed around the hanger 90a and the reinforcing member located around the bearing 99 may be interconnected, or the reinforcing member located around the bearing 71 and the reinforcing member located around the bearing 99 or one of the hangers 90a, 91a and 92a may be interconnected. It is preferable that the reinforcing members 105, 106 and 107 be formed integrally with the case 70 and the covers 70L, 70R at the time of resin molding.

In the motor assist unit 1 constructed as above, when a treading force is applied to the crank shaft 101 through the crank 11, the crank shaft 101 rotates. The rotation of the crank shaft 101 is transmitted to the support plate 102 through the one-way clutch 78 and the shafts 77a of the planetary gears 77 are rotated around the sun gear 73a, which sun gear is rotated through the planetary gears 77. With this rotation of the sun gear 73a, the driving sprocket 13 fixed to the sleeve 73 rotates.

When a load is imposed on the rear wheel WR, the treading force detecting ring 79 rotates in accordance with the magnitude of the load and the amount of the rotation of the ring is detected by the potentiometer 82. When the output of the potentiometer 82, i.e., an output proportional to the load, is larger than a predetermined value, the motor M is energized in accordance with the magnitude of the load to generate an assist power. The assist power is combined with a man-power drive torque generated at the crank shaft 101 and this combined power is transmitted to the driving sprocket 13.

When the brake is applied to decelerate the vehicle during running, the cam 88 is rotated around the shaft 89 by means of the brake wire 39 and the pressure plate 87 presses the clutch plate 86. As a result, the clutch plate 86 is biased to the assist gear 76 side and the boss 74 and the assist gear 76 are coupled together, whereby the rotation of the boss 74 is transmitted to the assist gear 76. Thus, the rotation of the driving sprocket 13 during braking is transmitted to the pinion 83 via the sleeve 73, boss 74 and assist gear 76. As the pinion 83 rotates, an electromotive force is generated in the stator coils 112 and there is performed a regenerative power generation. The resulting electric current is fed to the battery 4 through the controller 100, whereby the battery is charged.

In this embodiment, by operation performed by a rider of the vehicle it is possible to select a mode ("ECO mode") in which assist-cut is performed when a predetermined control standard is satisfied, which assist is resumed when another predetermined control standard is satisfied, for example during running on a flat road. Fig. 5 is a plan view showing an example of the power switch 29.

In the same figure, a desired mode can be selected by inserting a key (not shown) into a key hole 32 and rotating the key. With the key positioned "OFF," the power supply of the motor assist unit 1 is OFF and electric power is not supplied to the motor assist unit 1 from the battery 4. On the other hand, if the key is turned to "ON," electric power can be fed to the motor assist unit 1, and when the treading force exceeds a predetermined value, the motor M is controlled so that an assist power is provided in accordance with the ratio (assist ratio) between an assist power read from a preset map and the treading force. If the key is set to "ECO," "ECO mode" is selected and it becomes possible to make control for starting assist or for assist-cut in accordance with a predetermined control standard as will be described in detail later. Preferably, the power switch 29 is attached to the vehicle body so that "ON" position faces in the advancing direction of the vehicle.

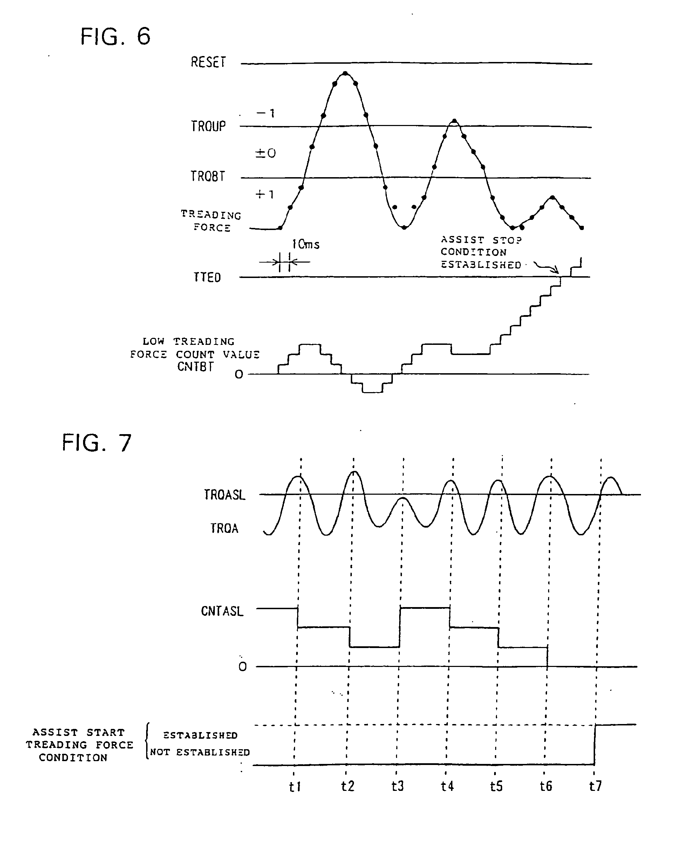

The following description is now provided about control for assist and assist-cut in ECO mode. Assist-cut is executed when it is judged from a detected treading force history that the treading force is at a level not requiring assist ("assist-cut level" hereinafter) lower than a predetermined value. Fig. 6 illustrates a treading force history for explaining conditions for assist-cut, in which a count value CNTBT of the counter is also shown, the count value CNTBT being updated, depending on the magnitude of the treading force. The treading force varies periodically correspondingly to the rotation cycle of the crank. In the same figure there are set both a treading force upper-limit value TRQUP and a treading force lower-limit value TRQBT. For example, the treading force upper-limit value TRQUP is set in the range of 15 to 20 kgf, while the treading force lower-limit value TRQBT is set in the range of 13 to 15 kgf. The treading force is detected by an interrupt processing performed at every 10 millisecond for example.

When the treading force TRQA is not larger than the treading force lower-limit value TRQBT, the count value CNTBT of the low level counter is incremented (+1), while when the treading force TRQA is not smaller than the treading force upper-limit value TRQUP, the count value CNTBT is decremented (-1). When the treading force TRQA is not smaller than its lower-limit value TRQBT and smaller than its upper-limit value TRQUP, the count value CNTBT is not changed. When the count value CNTBT exceeds a reference value (counter reference value) TTED, it is judged that the treading force TRQA is at the assist-cut level, and assist-cut is executed.

The count value CNTBT can be reset when the treading force TRQA exceeds a reset level RESET which is set higher than the treading force upper-limit value TRQUP, or when an assist start condition to be described later is established.

A description will now be given about a control for starting assist. When a treading force history is detected and it is judged that the treading force level is a level ("assist level" hereinafter) which requires an assist power, there is performed an assist based on an assist ratio corresponding to the predetermined level. Fig. 7 illustrates a treading force history for explaining an assist start condition. Also shown therein is a count value CNTASL which is updated every time the treading force exceeds a reference value. In the same figure there is set a reference value TRQASL of a treading force level which is a criterion of assist start and the number of times a peak value of varying treading force TRQA exceeds the reference value TRQASL is set as the count value CNTASL of the assist start counter. Here the count value CNTASL is decremented (-1) every time the peak value of the treading force TRQA exceeds the reference value TRQASL, and when the count value CNTASL becomes "0" and the treading force TRQA exceeds the reference value TRQASL, it is judged that the treading force is at the assist requesting level and there is established an assist start condition.

More specifically, in Fig. 7 there is shown an example in which the count value CNTASL is initially "3." In the same figure, at timings t1 and t2 the peak value of the treading force TRQA exceeds the reference value TRQASL and the count value CNTASL is decremented twice, but since the peak value in the next variation cycle did not exceed the reference value TRQASL, the count value CNTASL is reset to the initial value at timing t3. Thereafter, the count value CNTASL is decremented to "0" at timings t4 and t5. Further, when the treading force TRQA exceeds the reference value TRQASL at timing t7, there is established an assist start condition and assist is started.

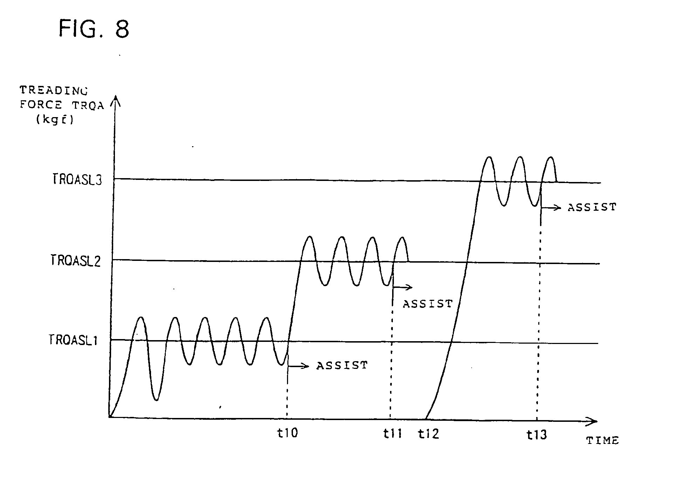

The reference value TRQASL can be set at plural levels and it is possible to set count values CNTASL correspondingly to the plural levels so as to be different from one another. Fig. 8 illustrates a treading force history for explaining assist start establishing conditions at reference values when the reference value TRQASL is set in a plural number. In the same figure, the reference value TRQASL1 corresponds to a treading force detected upon gradual acceleration during cruising on a flat road and it is set to, say, 20 kgf and the reference value TRQASL2 corresponds to a treading force detected when the bicycle comes to an ascent of a gentle slope and it is set to, say, 30 kgf. Further, the reference value TRQASL3 corresponds to a treading force detected at the time of start-up, steep slope ascent, or sudden acceleration during cruising and it is set to, say, 35 kgf. The count values CNTASL1, CNTASL2 and CNTASL3 corresponding to the reference values TRQASL1, TRQASL2 and TRQASL3 are set to "5," "3," and "2," respectively. It goes without saying that these settings may be done optionally in accordance with the character of the vehicle concerned and user.

In this connection, with reference to Fig. 8, when acceleration is made gradually during cruising on a flat road, the count value CNTASL1 is "0" at timing t10 and the treading force TRQA exceeds the reference value TRQASL1, so that assist is started at a treading force ratio (assist ratio) corresponding to the reference value TRQASL1. When the bicycle is at a gentle slope ascent, the count value CNTASL2 is "0" at timing t11 and the treading force TRQA exceeds the reference value TRQASL2, so that switching is made to an assist at an assist ratio corresponding to the reference value TRQASL2. Further, at the time of start-up, the count value CNTASL3 is "0" at timing t13 in a short time after start timing t12 and the treading force TRQA exceeds the reference value TRQASL3, so that assist is started at an assist ratio corresponding to the reference value TRQASL3.

The count values CNTASL1 to CNTASL3 are initialized when assist is stopped and also when CPU is reset.

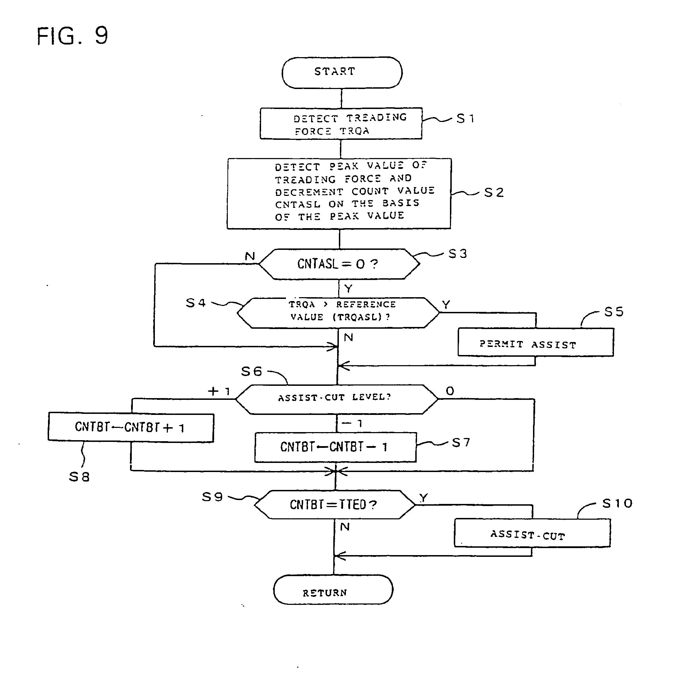

Fig. 9 is a flow chart of a principal portion of an ECO mode processing which includes assist and assist-cut described above in connection with Figs. 6 and 7. In step S1, the treading force TRQA is detected. In step S2, a peak value of the treading force TRQA is detected. In step S2, a peak value of the treading force TRQA is detected, and when the peak value exceeds the reference value TRQASL, the count value CNTASL is decremented, while when the peak value does not exceed the reference value TRQASL, the count value CNTASL is reset. In step S3, it is judged whether the treading force level is at the assist level corresponding to the reference value TRQASL, on the basis of whether the count value CNTASL is "0" or not. In step S4, it is judged whether the treading force TRQA (the present value) exceeds the reference value TRQASL or not.

If the answer in step S4 is affirmative, that is, if the treading force is at the predetermined level and the present treading force TRQA exceeds the reference value TRQASL, the processing flow advances to step S5, in which assist is permitted. In the execution of assist, an assist power is calculated on the basis of an assist ratio which is determined in accordance with the reference value TRQASL of treading force and the vehicle speed and then the output of the motor M is controlled so as to afford the assist power.

In step S6, it is judged whether the treading force level is at the assist-cut level or not in accordance with a relation of magnitude among the treading force upper-limit value TRQUP, treading force lower-limit value TRQBT and treading force TRQA. In step S7, in accordance with the result of the judgment made in step S6, the count value CNTBT is incremented when the assist-cut level is +1 (step S7), while when the assist-cut level is -1, the count value CNTBT is decremented (step S8). When the assist-cut level is "0," the flow advances to step S9. Conversely, the count value CNTBT may be decremented at the assist-cut level and be incremented when the treading force is not at the assist-cut level.

In step S9, whether the treading force TRQA is at the predetermined low level, i.e., at the assist-cut level, or not is judged on the basis of whether the count value CNTBT is at the reference value TTED or not. According to the construction wherein the count value CNTBT is decremented at the assist-cut level, the initial value is set to the reference value TTED and whether the treading force is at the assist-cut level or not is judged on the basis of whether the count value CNTBT is "0" or not. If it is judged that the treading force is at the assist-cut level, the flow advances to step S10, in which assist-cut is executed.

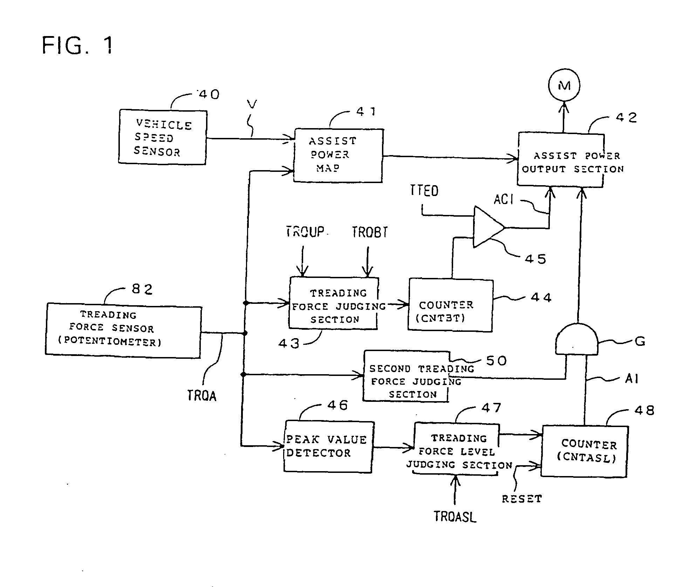

Fig. 1 is a block diagram showing principal functions of a controller 100 related to the processing in ECO mode, which functions can be executed by means of a microcomputer including a CPU. In the same figure, output data (treading force TRQA) of the potentiometer 82 as a treading force sensor and output data (vehicle speed V) of a vehicle speed sensor 40 are inputted to an assist power map 41 at a predetermined interrupt timing. Such assist power data as afford predetermined assist ratios are set in the assist power map 41 on the basis of the vehicle speed V and the treading force TRQA. When the vehicle speed V and the treading force TRQA are inputted, an assist power data is outputted in response thereto. For example, the assist power map is set so that even at the same treading force TRQA, the larger the vehicle speed V, the smaller the assist power, namely, the smaller the assist ratio. The assist power data is inputted to an assist power output section 42, which in turn controls the output of the motor M in accordance with the assist power data. The vehicle speed sensor 40 may be constituted, for example, by means which magnetically detects regular concaves and convexes formed on an outer periphery of the support plate 102 in the motor assist unit 1 and which outputs a vehicle speed V on the basis of the detected number and spacing.

A treading force judging section 43 judges the magnitude of the present treading force TRQA relative to the reference value of treading force (e.g., the upper-limit value TRQUP of treading force and or the lower-limit value TRQBT of treading force and increments or decrements the count value CNTBT of the low level counter 44 on the basis of the result of the judgment. A comparator 45 compares the count value CNTBT of the low level counter 44 with the reference value TTED and outputs an assist-cut command ACI to the assist power output section 42 when the count value CNTBT has reached the reference value TTED. The treading force judging section 43, the low level counter 44 and the comparator 45 constitute treading force level detecting means.

A peak value detector 46 is supplied with the treading force TRQA from the treading force sensor 82 and detects a peak value of the treading force TRQA which varies periodically. The peak value is inputted to a treading force level judging section 47, which in turn updates the count value CNTASL of an assist counter 48 when it judges that the peak value has exceeded the predetermined treading force level TRQASL. When the count value CNTASL has reached the predetermined value, the assist counter 48 outputs an assist permission command AI, which is inputted to the assist power output section 42 through a gate G. A second treading force judging section 50 outputs a detection signal when the present treading force TRQA has exceeded the treading force level TRQASL. The gate G is opened when supplied with the detection signal from the second treading force judging section 50 and the assist permission command is inputted to the assist power output section 42. The peak value detector 46, the treading force level judging section 47 and the assist counter 48 constitute treading force changing level detecting means.

The assist power output section 42 energizes the motor M so as to execute assist or assist-cut in accordance with the assist permission command AI or assist-cut command AC. More specifically, a conduction angle of FET which constitutes a driver circuit of the motor M is determined in accordance with the assist power data and the magnitude of assist power is controlled. The treading force level judging section 47 outputs a reset signal when the peak value does not exceed the treading force level TRQASL to reset the initial value of the count value in the assist counter 48.

As will be apparent from the above description, it is judged that assist is not needed or a large assist power is not needed, on the basis of not an instantaneously detected treading force but a treading force history, so even in the presence of noise or even when the bicycle has got over a slight stepped portion, assist-cut can be made effectively if the treading force as a whole is at a low level.

According to the invention since it is judged that assist is need on the basis of not an instantaneously detected treading force level but a treading force history, assist can be started even when a high treading force is not always detected, for example even when a medium treading force is continued such as gentle acceleration on a flat road.

## Claims

1. An assist power controller for a motor-assisted bicycle provided with a man-power drive system (12, 11, 101) for the transfer of a treading force applied to a pedal (12) and a motor drive system (1) for adding an assist power to said man-power drive system (12, 11, 101) in accordance with said treading force (TRQA), wherein said assist power controller (100) comprises:
treading force level detecting means (43, 44, 45) comprising means (44) for providing a low treading force signal on the basis of history of said treading force (TRQA) and means (45) for detecting that the low treading force signal is at a predetermined assist-cut level; and
assist power output means (42) comprising means for stopping the addition of the assist power or decreasing an addition ratio of the assist power to the treading force (TRQA) when it is judged by said treading force level detecting means (43, 44, 45) that said low treading force signal is at the assist-cut level, and
wherein said treading force level detecting means (43, 44, 45) comprises treading force judging means (43) for detecting the magnitude of the present treading force relative to a reference value of treading force (TRQUP, TRQBT)
**characterized in that**
said means (44) for providing a low treading force signal comprises a low level counter (44) which is incremented or decremented dependent on the magnitude of the treading force (TRQA), and said means (45) for detecting that the low treading force signal is at a predetermined assist-cut level comprises a comparator (45) for judging that said treading force (TRQA) is at the assist-cut level when a count value (CNTBT) of said low level counter (44), which forms said low treading force signal, becomes a reference count value (TTED), which forms said predetermined assist-cut level,
wherein said reference value of treading force (TRQUP, TRQBT) comprises an upper-limit value of treading force (TRQUP) and a lower-limit value of treading force (TRQBT), the count value (CNTBT) of said low level counter (44) is decremented when said treading force (TRQA) exceeds said upper-limit value of treading force (TRQUP), while when the treading force (TRQA) is smaller than said lower-limit value of treading force (TRQBT), the count value (CNTBT) is incremented, and when the count value (CNTBT) becomes a value of not smaller than the reference count value (TTED), it is judged that the treading force is at the assist-cut level.

2. The assist power controller for a motor-assisted bicycle according to claim 1, said assist power controller (100) furthermore comprising treading force changing level detecting means (46, 47, 48) which, on the basis of history of said treading force (TRQA), detects that the treading force (TRQA) is changing in the vicinity of a predetermined assist level wherein said assist power output means (42) comprises means for starting the addition of said assist power when it is judged by said treading force changing level detecting means (46, 47, 48) that said treading force (TRQA) is changing in the vicinity of the assist level.

3. The assist power controller for a motor-assisted bicycle according to claim 2, wherein said treading force changing level detecting means (46, 47, 48) is constructed so as to judge that said treading force (TRQA) is changing in the vicinity of the assist level when the treading force (TRQA) exceeds a reference value (TRQASL) of treading force level in a continuous changing cycle thereof.

4. The assist power controller for a motor-assisted bicycle according to claim 3, wherein said reference value (TRQASL) of treading force level is set at a value (TRQASL1) corresponding to a treading force (TRQA) for gradual acceleration on a flat road.

5. The assist power controller for a motor-assisted bicycle according to claim 4, wherein said treading force changing level detecting means (46, 47, 48) has an assist counter (48) which detects the number of times said treading force (TRQA) exceeds said reference value (TRQASL) of treading force level in a continuous cycle, and is constructed so as to judge that said treading force (TRQA) is changing in the vicinity of the assist level when a count value (CNTASL) of said assist counter (48) exceeds a predetermined number of times.

6. The assist power controller for a motor-assisted bicycle according to claim 5, wherein said reference value (TRQASL) of treading force level is set in a plural number so that the lower the level, the larger the predetermined number of times set as the count value (CNTASL).

## Patentansprüche

1. Eine Unterstützungskraft-Steuer/Regeleinrichtung für ein motorunterstütztes Fahrrad, welches versehen ist mit einem Muskelkraftantriebssystem (12, 11, 101) für die Übertragung einer auf ein Pedal (12) ausgeübten Tretkraft, und einem Motorantriebssystem (1), um dem Muskelkraftantriebssystem (12, 11, 101) gemäß der Tretkraft (TRQA) eine Unterstützungskraft hinzuzufügen, wobei die Unterstützungskraft-Steuer/Regeleinrichtung (100) umfasst:
ein Tretkraftniveau-Erfassungsmittel (43, 44, 45), welches ein Mittel (44) umfasst, um ein niedriges Tretkraft-Signal auf der Basis der Historie der Tretkraft (TRQA) bereitzustellen, und ein Mittel (45) umfasst, um zu erfassen, dass das niedrige Tretkraft-Signal auf einem vorbestimmten Unterstützungsreduzierungsniveau ist; und
ein Unterstützungskraft-Ausgabemittel (42), welches ein Mittel umfasst, um die Hinzufügung der Unterstützungskraft zu stoppen oder ein Hinzufügungsverhältnis der Unterstützungskraft zu der Tretkraft (TRQA) zu verringern, wenn von dem Tretkraftniveau-Erfassungsmittel (43, 44, 45) beurteilt ist, dass das niedrige Tretkraft-Signal auf dem Unterstützungsreduzierungsniveau ist, und
wobei das Tretkraftniveau-Erfassungsmittel (43, 44, 45) ein Tretkraft-Beurteilungsmittel (43) umfasst zur Erfassung der Größe der gegenwärtigen Tretkraft relativ zu einem Referenzwert der Tretkraft (TRQUP, TRQBT),
**dadurch gekennzeichnet,**
**dass** das Mittel (44) zum Bereitstellen eines niedrigen Tretkraft-Signals einen Niedrigniveauzähler (44) umfasst, welcher in Abhängigkeit von der Größe der Tretkraft (TRQA) erhöht oder verringert wird, und dass das Mittel (45) zur Erfassung, dass das niedrige Tretkraft-Signal auf einem vorbestimmten Unterstützungsreduzierungsniveau ist, einen Komparator (45) umfasst zur Beurteilung, dass die Tretkraft (TRQA) auf dem Unterstützungsreduzierungsniveau ist, wenn ein Zählerwert
(CNTBT) des Niedrigniveauzählers (44), welcher das niedrige Tretkraft-Signal bildet, ein Referenzzählerwert (TTED) wird, welcher das vorbestimmte Unterstützungsreduzierungsniveau bildet,
wobei der Referenzwert der Tretkraft (TRQUP, TRQBT) einen oberen Grenzwert der Tretkraft (TRQUP) und einen unteren Grenzwert der Tretkraft (TRQBT) umfasst, wobei der Zählerwert (CNTBT) des Niedrigniveauzählers (44) verringert wird, wenn die Tretkraft (TRQA) den oberen Grenzwert der Tretkraft (TRQUP) überschreitet, während dann, wenn die Tretkraft (TRQA) kleiner als der untere Grenzwert der Tretkraft (TRQBT) ist, der Zählerwert (CNTBT) erhöht wird, und wenn der Zählerwert (CNTBT) ein Wert wird, welcher nicht kleine als der Referenzzählerwert (TTED) ist, beurteilt wird, dass die Tretkraft auf dem Unterstützungsreduzierungsniveau ist.

2. Unterstützungskraft-Steuer/Regeleinrichtung für ein motorunterstütztes Fahrrad gemäß Anspruch 1, wobei die Unterstützungskraft-Steuer/Regeleinrichtung (100) ferner ein Tretkraft-Veränderungsniveau-Erfassungsmittel (46, 47, 48) umfasst, welches auf der Basis der Historie der Tretkraft (TRQA) erfasst, dass sich die Tretkraft (TRQA) in der Nähe eines vorbestimmten Unterstützungsniveaus verändert, wobei das Unterstützungskraft-Ausgabemittel (42) ein Mittel umfasst, um die Hinzufügung der Unterstützungskraft zu starten, wenn von dem Tretkraft-Veränderungsniveau-Erfassungsmittel (46, 47, 48) beurteilt wird, dass sich die Tretkraft (TRQA) in der Nähe des Unterstützungsniveaus verändert.

3. Unterstützungskraft-Steuer/Regeleinrichtung für ein motorunterstütztes Fahrrad gemäß Anspruch 2, wobei das Tretkraft-Veränderungsniveau-Erfassungsmittel (46, 47, 48) derart aufgebaut ist, dass es beurteilt, das sich die Tretkraft (TRQA) in der Nähe des Unterstützungsniveaus ändert, wenn die Tretkraft (TRQA) einen Referenzwert (TRQASL) des Tretkraftniveaus in einem kontinuierlichen Veränderungszyklus davon überschreitet.

4. Unterstützungskraft-Steuer/Regeleinrichtung für ein motorunterstütztes Fahrrad gemäß Anspruch 3, wobei der Referenzwert (TRQASL) des Tretkraftniveaus auf einen Wert (TRQASL1) gesetzt wird entsprechend einer Tretkraft (TRQA) für eine allmähliche Beschleunigung auf einer ebenen Straße.

5. Unterstützungskraft-Steuer/Regeleinrichtung für ein motorunterstütztes Fahrrad gemäß Anspruch 4, wobei das Tretkraft-Veränderungsniveau-Erfassungsmittel (46, 47, 48) einen Unterstützungszähler (48) hat, welcher die Häufigkeit erfasst, die die Tretkraft (TRQA) den Referenzwert (TRQASL) des Tretkraftniveaus in einem kontinuierlichen Zyklus überschreitet, und derart aufgebaut ist, das es beurteilt, dass sich die Tretkraft (TRQA) in der Nähe des Unterstützungsniveaus ändert, wenn ein Zählerwert (CNTASL) des Unterstützungszählers (48) eine vorbestimmte Häufigkeit überschreitet.

6. Unterstützungskraft-Steuer/Regeleinrichtung für ein motorunterstütztes Fahrrad gemäß Anspruch 5, wobei der Referenzwert (TRQASL) des Tretkraftniveaus mehrfach gesetzt ist, so dass die vorbestimmte Häufigkeit, welche als der Zählerwert (CNTASL) gesetzt ist, umso größer wird, je niedriger das Niveau ist.

## Revendications

1. Contrôleur de puissance d'assistance pour une bicyclette assistée par moteur et équipée d'un système d'entraînement par puissance humaine (12, 11, 101) en vue du transfert d'une force de pédalage appliquée à une pédale (12), et d'un système d'entraînement par moteur (1) pour ajouter une puissance d'assistance audit système d'entraînement par puissance humaine (12, 11, 101) en fonction de ladite force de pédalage (TRQA), dans lequel ledit contrôleur de puissance d'assistance (100) comprend :
des moyens de détection de niveau de force de pédalage (43, 44, 45) comprenant des moyens (44) pour fournir un signal de force de pédalage faible sur la base d'un historique de ladite force de pédalage (TRQA), et des moyens (45) pour détecter que le signal de force de pédalage faible se trouve à un niveau de coupure d'assistance prédéterminé ; et
des moyens de fourniture de puissance d'assistance (42) comprenant des moyens pour arrêter l'ajout de la puissance d'assistance ou décroître un taux d'ajout de la puissance d'assistance à la force de pédalage (TRQA) lorsqu'il est jugé par lesdits moyens de détection de niveau de force de pédalage (43, 44, 45) que ledit signal de force de pédalage faible se trouve au niveau de coupure d'assistance, et
dans lequel lesdits moyens de détection de niveau de force de pédalage (43, 44, 45) comprennent des moyens de jugement de force de pédalage (43) pour détecter l'intensité de la présente force de pédalage par rapport à une valeur de référence de force de pédalage (TRQUP, TRQBT),
**caractérisé en ce que**
lesdits moyens (44) pour fournir un signal de force de pédalage faible comprennent un compteur de niveau faible (44) qui est incrémenté ou décrémenté en fonction de l'intensité de la force de pédalage (TRQA), et lesdits moyens (45) pour détecter que le signal de force de pédalage faible se trouve à un niveau de coupure d'assistance prédéterminé comprennent un comparateur (45) pour juger que ladite force de pédalage (TRQA) se trouve au niveau de coupure d'assistance lorsqu'une valeur de comptage (CNTBT) dudit compteur de niveau faible (44), qui forme ledit signal de force de pédalage faible, atteint une valeur de comptage de référence (TTED), qui forme ledit niveau de coupure d'assistance prédéterminé,
dans lequel ladite valeur de référence de force de pédalage (TRQUP, TRQBT) comprend une valeur de limite supérieure de force de pédalage (TRQUP) et une valeur de limite inférieure de force de pédalage (TRQBT), la valeur de comptage (CNTBT) dudit compteur de niveau faible (44) est décrémentée lorsque ladite force de pédalage (TRQA) dépasse ladite valeur de limite supérieure de force de pédalage (TRQUP), tandis que, lorsque la force de pédalage (TRQA) est inférieure à ladite valeur de limite inférieure de force de pédalage (TRQBT), la valeur de comptage (CNTBT) est incrémentée, et lorsque la valeur de comptage (CNTBT) atteint une valeur non inférieure à la valeur de comptage de référence (TTED), il est jugé que la force de pédalage se trouve au niveau de coupure d'assistance.

2. Contrôleur de puissance d'assistance pour une bicyclette assistée par moteur selon la revendication 1, ledit contrôleur de puissance d'assistance (100) comprenant, en outre, des moyens de détection de niveau de variation de force de pédalage (46, 47, 48) qui, sur la base d'un historique de ladite force de pédalage (TRQA), détectent que la force de pédalage (TRQA) varie au voisinage d'un niveau d'assistance prédéterminé, dans lequel lesdits moyens de fourniture de puissance d'assistance (42) comprennent des moyens pour débuter l'ajout de ladite puissance d'assistance lorsqu'il est jugé par lesdits moyens de détection de niveau de variation de force de pédalage (46, 47, 48) que ladite force de pédalage (TRQA) varie au voisinage du niveau d'assistance.

3. Contrôleur de puissance d'assistance pour une bicyclette assistée par moteur selon la revendication 2, dans lequel lesdits moyens de détection de niveau de variation de force de pédalage (46, 47, 48) sont configurés de manière à juger que ladite force de pédalage (TRQA) varie au voisinage du niveau d'assistance lorsque la force de pédalage (TRQA) dépasse une valeur de référence (TRQASL) de niveau de force de pédalage au cours de son cycle de variation continu.

4. Contrôleur de puissance d'assistance pour une bicyclette assistée par moteur selon la revendication 3, dans lequel ladite valeur de référence (TRQASL) de niveau de force de pédalage est fixée à une valeur (TRQASL1) correspondant à une force de pédalage (TRQA) pour une accélération progressive sur une route plate.

5. Contrôleur de puissance d'assistance pour une bicyclette assistée par moteur selon la revendication 4, dans lequel lesdits moyens de détection de niveau de variation de force de pédalage (46, 47, 48) comportent un compteur d'assistance (48) qui détecte le nombre de fois où ladite force de pédalage (TRQA) dépasse ladite valeur de référence (TRQASL) de niveau de force de pédalage au cours d'un cycle continu, et sont configurés de manière à juger que ladite force de pédalage (TRQA) varie au voisinage du niveau d'assistance lorsqu'une valeur de comptage (CNTASL) dudit compteur d'assistance (48) dépasse un nombre de fois prédéterminé.

6. Contrôleur de puissance d'assistance pour une bicyclette assistée par moteur selon la revendication 5, dans lequel ladite valeur de référence (TRQASL) de niveau de force de pédalage est fixée à plusieurs nombres de telle façon que plus le niveau est faible, plus le nombre de fois prédéterminé fixé en tant que valeur de comptage (CNTASL) est élevé.
